# EUROPÄISCHE PATENTSCHRIFT

(11) **EP 4 513 160 B1**
(45) Veröffentlichungstag und Bekanntmachung des Hinweises auf die Patenterteilung: **13.05.2026**
(21) Anmeldenummer: 24195307.4
(22) Anmeldetag: 20.08.2024
(51) Int. Cl.: G01M 11/02, G01M 11/00

(54) **PRÜFVORRICHTUNG FÜR EINEN OPTISCHEN PRÜFLING UND VERFAHREN ZUR PRÜFUNG EINES OPTISCHEN PRÜFLINGS**
TESTING DEVICE FOR AN OPTICAL TEST OBJECT AND METHOD FOR TESTING AN OPTICAL TEST OBJECT
DISPOSITIF DE TEST POUR UN ÉCHANTILLON OPTIQUE ET PROCÉDÉ DE TEST D'UN ÉCHANTILLON OPTIQUE

(30) Priorität: 21.08.2023 DE 102023122301
(43) Veröffentlichungstag der Anmeldung: 26.02.2025
(73) Patentinhaber: Trioptics GmbH, 22880 Wedel (DE)
(72) Erfinder: Ruprecht, Aiko, 22880 Wedel (DE)
(74) Vertreter: Waldauf, Alexander

(56) Entgegenhaltungen:
- DE-A1- 102014 205 406
- US-A1- 2008 273 200
- US-A1- 2014 233 038

## Beschreibung

Der hier vorgestellte Ansatz schafft eine Prüfvorrichtung für einen optischen Prüfling und ein Verfahren zur Prüfung eines optischen Prüflings gemäß den Hauptansprüchen. Manche Linsen haben polarisationsbeeinflussende Eigenschaften, da sie darüber entweder die Brechkraft erzeugen (Flüssigkristalllinsen) oder entsprechend beschichtet sind (Polarisationsschichten, Lambda/4-Schichten, ...). Beim Einbau solcher Linsen ist sowohl deren Zentrierung als auch die Ausrichtung der Polarisationsachse wichtig. Oftmals sind hierbei jedoch mehrere Arbeitsschritte erforderlich, um einerseits die Zentrierung als auch andererseits die Ausrichtung der Polarisationsachse zu messen. Diese Durchführung von mehreren Arbeitsschritten erfordert jedoch einen Mehraufwand hinsichtlich der Ausgestaltung der Prüfvorrichtung, um in unterschiedlichen Arbeitsschritten einerseits die Zentrierung und andererseits die Ausrichtung der Polarisationssachse zu messen. Zugleich erfordert eine solche Prüfvorrichtung einen erhöhten Bauraumbedarf. Es wären somit je eine sequenzielle Messung von Zentrierung und Polarisation mit zwei verschiedenen Messköpfen vorzunehmen. Entsprechend beansprucht die Messtechnik einigen Bauraum und die zwei getrennten Einzelmessungen führen zu langen Messzeiten.

US2014/233038A1 und DE102014205406A1 offenbaren Prüfvorrichtungen für einen optischen Prüfling.

Vor diesem Hintergrund besteht die Aufgabe der vorliegenden Erfindung darin, eine verbesserte Prüfvorrichtung für einen optischen Prüfling sowie ein verbessertes Verfahren zur Prüfung eines optischen Prüflings zu schaffen.

Diese Aufgabe wird durch den Gegenstand der Hauptansprüche gelöst.

Der hier vorgestellte Ansatz schafft eine Prüfvorrichtung für einen optischen Prüfling zur Bestimmung von Dezentrierung und Polarisationseigenschaft des Prüflings, wobei die Prüfvorrichtung die folgenden Merkmale aufweist:
- eine Strahlquelle zum Aussenden eines Strahlenbündels entlang einer optischen Achse;
- einem in der optischen Achse als Filterelement ausgebildetem optischen Element zur Einprägung oder Filterung einer bestimmten Polarisationsrichtung des Lichts des Strahlenbündels oder eines vom Prüfling reflektierten oder transmittierten Lichts;
- einer Rotationseinheit, die ausgebildet ist, um eine Rotation des zumindest in der Nähe der optischen Achse liegenden Prüflings um einen Rotationswinkel relativ zu einem Messsystem und/oder der Prüfeinheit vorzunehmen;
- eine Detektoreinheit, die ausgebildet ist, um das vom Prüfling reflektierte oder transmittierte Licht aufzufangen und ein zumindest näherungsweise scharfes Bild der Lichtquelle oder des Reticles zu erzeugen; und
- eine Auswerteeinheit, die ausgebildet ist, sowohl aus dem gemessenen Schlagkreis einen Kennwert für die Zentrierung zu bestimmen, als auch eine Polarisationsachse des Prüflings aus dem Rotationswinkel und der damit verbundenen Variation der Signalhelligkeit des vom Prüfling reflektierten oder durch den Prüfling transmittierten Lichtstrahl des Strahlenbündels zu bestimmen.

Weiterhin schafft der hier vorgestellte Ansatz eine Prüfvorrichtung für einen optischen Prüfling, wobei die Prüfvorrichtung die folgenden Merkmale umfasst:
- eine Strahlquelle zum Aussenden eines Strahlenbündels entlang einer optischen Achse;
- ein optisches Element zur Kollimation des ausgesendeten Strahlenbündels;
- ein als polarisationsbeeinflussendes ausgebildetes optisches Element zur Einprägung einer bestimmten Polarisationsrichtung des Lichts des Strahlenbündels;
- ein Element zur Halterung des optischen Prüflings;
- ein optisches Element zur Rekollimation des durch den Prüfling fokussierten Strahlenbündels;
- ein als polarisationsfilterndes ausgebildetes, optisches Element zur Filterung eines vom Prüfling transmittierten Lichtes;
- ein optisches Element zur Refokussierung des vom Prüfling transmittierten Lichtes auf eine Detektionsebene;
- eine Rotationseinheit, die ausgebildet ist, um eine Rotation des in der optischen Achse liegenden Prüflings relativ zur Prüfvorrichtung und/oder einzelner Baugruppen davon, um eine Strahlenachse und/oder die optische Achse, vorzunehmen; und
- eine Detektoreinheit, die ausgebildet ist, um eine Polarisationsachse des Prüflings sowie dessen Dezentrierung aus dem Rotationswinkel und einem vom Prüfling transmittierten Lichtstrahl des Strahlenbündels, simultan, zu bestimmen.

Unter einer Strahlquelle kann beispielsweise eine Lichtquelle oder Lampe verstanden werden, die entsprechende Lichtstrahlen als Strahlenbündel entlang der optischen Achse ausgibt. Alternativ kann dies auch ein beleuchtetes Reticle sein. Unter einem Filterelement kann beispielsweise ein optisches Element verstanden werden, welches einem einfallenden Licht eine entsprechende Polarisationsrichtung eingeprägt. Unter einer Rotationseinheit kann beispielsweise eine mechanische Einheit verstanden werden, welche den Prüfling in Bezug relativ zur Messvorrichtung dreht, wobei dies entweder durch eine aktive Drehung des Prüflings selbst bei ruhendem Filterelement oder durch eine Drehung der Messvorrichtung bei ruhendem Prüfling ausgeführt werden kann. Beispielsweise kann die Rotationseinheit ausgebildet sein, um mittels eines elektrischen Antriebs die Messvorrichtung oder den Prüfling um einen bestimmten Rotationswinkel, beispielsweise um die optische Achse oder um eine Achse des Strahlenbündels, zu verdrehen. Unter einer Detektionseinheit kann beispielsweise ein optischer Sensor oder eine Projektionsfläche verstanden werden, auf den oder die ein von dem Prüfling reflektiertes Licht oder durch den Prüfling transmittiertes Licht abgebildet und nachfolgend durch eine entsprechende Auswertungseinheit hinsichtlich der Lage der Polarisationsachse des Prüflings ausgewertet wird.

Der hier vorgestellte Ansatz basiert auf der Erkenntnis, dass die Lage der Polarisationsachse durch eine Rotation des Prüflings in Bezug zum Filterelement sehr einfach ausgewertet werden kann. Dies kann beispielsweise dadurch erfolgen, dass während der Rotation eine Helligkeitsvariation erfasst und ausgewertet wird, wobei ausgenutzt wird, dass bei gleicher Lage der Polarisationsachse des Prüflings bzw. einer Oberfläche des Prüflings, mit der eingestellten Polarisationsrichtung, die durch das Filterelement dem Licht des Strahlenbündels eingeprägt wird, die Lichtintensität am größten ist, die von der Detektoreinheit empfangen werden kann. Auf diese Weise kann mit technisch sehr einfachen Mitteln eine Prüfvorrichtung für den optischen Prüfling geschaffen werden, bei dem eine Möglichkeit besteht, die Polarisationsachse des Prüflings zu erfassen und zugleich mit dem gleichen Messaufbau auch die Möglichkeit besteht, eine Zentriermessung, also eine Messung des optischen Zentrums bzw. der Lage der optischen Achse des Prüflings durchführen zu können. Der hier vorgeschlagene Ansatz bietet somit den Vorteil, durch den vorgeschlagenen Messaufbau mehrere Parameter des Prüflings gleichzeitig bzw. simultan zu messen, wodurch ein weiterer Messaufbau entfallen kann und somit Bauraum bei der Prüfvorrichtung eingespart werden kann.

Günstig ist eine Ausführungsform des hier vorgeschlagenen Ansatzes, bei der die Detektoreinheit ausgebildet ist, um die Polarisationsachse des Prüflings unter Verwendung einer Helligkeit, eines Helligkeitsmusters und/oder Lichtintensitätsmusters des Lichtstrahls des Strahlenbündels zu bestimmen. Eine solche Ausführungsform bietet den Vorteil, die Helligkeit und/oder Helligkeitsmusterbezuges bzw. das Intensitätsmuster technisch sehr einfach erfassen zu können und somit die Polarisationssachse des Prüflings präzise bestimmen zu können.

Von Vorteil ist weiterhin eine Ausführungsform des hier vorgeschlagenen Ansatzes, bei der die Rotationseinheit ausgebildet ist, um den Prüfling und/oder die Sensoreinheit um eine Strahlenachse und/oder die optische Achse zu rotieren. Beispielsweise kann eine solche Strahlenachse eine Achse eines Lichtstrahls im Strahlenbündel sein. Eine derartige Ausführungsform bietet den Vorteil einer kompakten Bauform der Prüfvorrichtung.

Gemäß einer anderen Ausführungsform des hier vorgeschlagenen Ansatzes kann ein Filterelement ausgebildet sein, um dem Licht eine zirkulare oder lineare Polarisationsrichtung einzuprägen und/oder wobei die Detektoreinheit einen Analysator aufweist, der ausgebildet ist, um ein zirkular oder linear polarisiertes Licht passieren zu lassen. Eine solche Ausführungsform bietet den Vorteil, durch das Filterelement dem Licht des Strahlenbündels eine sehr präzise Polarisationsrichtung einfach einzuprägen oder auszuwerten, sodass die Erkennung der Polarisationsrichtung des Prüflings technisch einfach umgesetzt werden kann.

Besonders vorteilhaft ist weiterhin eine Ausführungsform des hier vorgeschlagenen Ansatzes, bei dem das Polarisationselement und der Analysator derart zueinander angeordnet sind, dass ein vordefinierter azimutaler Winkel zwischen der durch das Formgebungselement definierten Polarisationsrichtung und einer durch den Analysator definierten Polarisationsrichtung des den Analysator passierenden Lichts eingestellt ist. Durch die Einstellung des vordefinierten azimutalen Winkels lässt sich bei Kenntnis dieses Winkels eine weitere Verbesserung bei der Präzision der Erkennung der Polarisationssachse des Prüflings erreichen und es kann zudem die Polarisationsachse eines doppelbrechenden optischen Elementes bestimmt werden.

Besonders günstig ist eine Ausführungsform des hier vorgeschlagenen Ansatzes, bei der die Detektionseinheit ausgebildet ist, um eine Zentriermessung des Prüflings durchzuführen. Eine solche Zentriermessung des Prüflings kann beispielsweise eine Messung der optischen Achse, des optischen Zentrums oder eines weiteren Parameters des Prüflings umfassen. Eine derartige Ausführungsform des hier vorgeschlagenen Ansatzes bietet den Vorteil, mit einem Messaufbau mehrere Parameter wie die Polarisationsachse des Prüflings und einen Zentrierwert bestimmen zu können, sodass für die Prüfvorrichtung nur ein sehr geringer Bauraum erforderlich ist und andererseits eine Messung ohne ein aufwendiges Wechseln des Prüflings in unterschiedliche Geräte oder unterschiedliche Messung an einem Gerät ausgeführt werden kann.

Weiterhin kann gemäß einer Ausführungsform des hier vorgestellten Ansatzes die Detektionseinheit ausgebildet sein, um als ein Maß für die Zentriermessung einen Durchmesser und/oder einen Radius eines erfassten Schlagkreises. Durch die Erfassung eines derartigen Durchmessers oder Radius kann die Zentriermessung technisch sehr einfach und schnell implementiert oder ausgeführt werden.

Besonders effizient arbeitet eine Ausführungsform des hier vorgeschlagenen Ansatzes, bei der die Detektionseinheit ausgebildet ist, um eine Bestimmung der Polarisationsachse und der Zentriermessung parallel und/oder zeitgleich auszuführen, wobei im Schlagkreisbild zusätzlich zum Radius und/oder Durchmesser eine Helligkeitsvariation erfasst wird. Durch eine solche Ausführungsform können Prüfvorrichtungen geschaffen werden, die lediglich einen geringen Bauraumbedarf und im Betrieb einfach zu handhaben sind.

Auch kann gemäß einer weiteren Ausführungsform des hier vorgeschlagenen Ansatzes die Strahlungsquelle und die Detektoreinheit in einem Autokollimator zusammen mit dem polarisierenden Filterelement in der optischen Achse verbaut sein, wobei ein Strahlteiler vorgesehen ist, um ein von dem Prüfling reflektiertes Licht aus einem zu dem von der Strahlungsquelle eingestrahlten Licht, parallelen Strahlengang auszukoppeln. Eine solche Ausführungsform bietet den Vorteil einer sehr kompakten Bauform der Prüfvorrichtung.

Gemäß einer weiteren Ausführungsform kann eine zusätzliche Rotation des Polarisationselementes im Messystem relativ zum Messystem durchgeführt werden. Dies kann entweder mechanisch oder optisch erfolgen. Eine optische Rotation des Polarisationselementes kann z. B. über ein Flüssigkristall- oder LCD-Element realisiert werden. Dabei wird die Polarisationsachse durch das Anlegen einer Spannung gedreht.

In einer Ausführungsform, in der die Rotation des Polarisationselementes mit der 1,25-fachen physischen Rotation erfolgt, ergibt sich eine besonders vorteilhafte Ausführung. Bei einer physischen Rotation um 360 Grad, erhält man entsprechend eine zusätzliche Rotation des Polarisationselementes um go°. In einer anschließenden zweiten Umdrehung erhöht sich die zusätzliche Rotation des polarisierenden Elementes auf 180°, was optisch der Startkonfiguration entspricht. Daher erhält man für jeden Punkt des doppelten Schlagkreises zwei Intensitätswerte, die mit senkrecht zueinander stehenden Polarisationsrichtungen verknüpft sind und entsprechend unterschiedliche bzw. invertierte Intensitätsverläufe ergeben. Damit erhält man auch in den Bereichen des Schlagkreises, in denen in anderen Ausführungsformen nur eine sehr geringe Signalintensität vorliegt, zusätzlich eine hohe Signalintensität. Durch diesen komplementären Intensitätsverlauf kann für die Messung der Dezentrierung, durch Addition der Bilder, ein "vollständiger" Schlagkreis verwendet werden. Alternativ kann dieser vorteilhafte Signalempfang auch dadurch erzielt werden, dass das Messystem und das Polarisationselement mechanisch zueinander beweglich sind und sich unterschiedlich schnell drehen.

Gemäß einer weiteren Ausführungsform des hier vorgeschlagenen Ansatzes kann ein Kollimator mit vorgesetztem Polarisator als Filterelement verwendet werden und ein Teleskop mit einem Analysator im Strahlengang zwischen einer Hilfsoptik und/oder einer Dekollimationslinse vorgesehen sein.

Von Vorteil ist weiterhin eine Ausführungsform des hier vorgeschlagenen Ansatzes als Verfahren zur Prüfung eines optischen Prüflings, wobei das Verfahren unter Verwendung einer Variante einer hier vorgestellten Prüfvorrichtung ausgeführt wird und die folgenden Schritte aufweist:
- Ausgeben von Licht eines Strahlenbündels aus der Strahlungsquelle durch das Filterelement auf den Prüfling und Empfangen eines von dem Prüfling reflektierten oder transmittierten Lichts des Strahlenbündels in der Detektoreinheit;
- Ausführen einer relativen Rotationsbewegung zwischen Prüfling und Messvorrichtung;
   und
- Bestimmen der Polarisationsachse des Prüflings aus dem vom Prüfling reflektierten oder transmittierten Lichts.

Auch durch eine solche Ausführungsform lassen sich die vorstehend genannten Vorteile schnell und effizient realisieren.

In einer weiteren Ausführungsform des Verfahrens wird die Rotationsbewegung der Zentriermesseinheit mit einer anderen Rotationsgeschwindigkeit ausgeführt, als die Rotationsbewegung des oder der polarisierenden Elemente.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Günstige Ausführungsbeispiele des hier vorgestellten Ansatzes werden nachfolgend mit Bezug auf die beigefügten Figuren näher erläutert. Es zeigt:
Fig.1 eine schematische Darstellung eines Ausführungsbeispiels einer Prüfvorrichtung zum Prüfen eines optischen Prüflings;
Fig. 2 eine schematische Darstellung des Abbildes des vom Prüfling entsprechende Anordnung aus Figur 1 reflektierten Lichtes auf den Sensor;
Fig. 3 eine schematische Darstellung von Signalverläufen einer erfassten Lichtintensität ohne und mit zusätzlicher Rotation eines Polarisationselementes;
Fig. 4 eine schematische Darstellung eines Ausführungsbeispiels einer Prüfvorrichtung zum Prüfen eines optischen Prüflings in Transmission; und
Fig. 5 ein Ablaufdiagramm eines Ausführungsbeispiels eines Verfahrens

Gleiche oder ähnliche Elemente werden in den nachfolgenden Figuren durch gleiche oder ähnliche Bezugszeichen versehen, wobei aus Gründen der Übersichtlichkeit auf eine wiederholte Beschreibung dieser Elemente verzichtet wird.

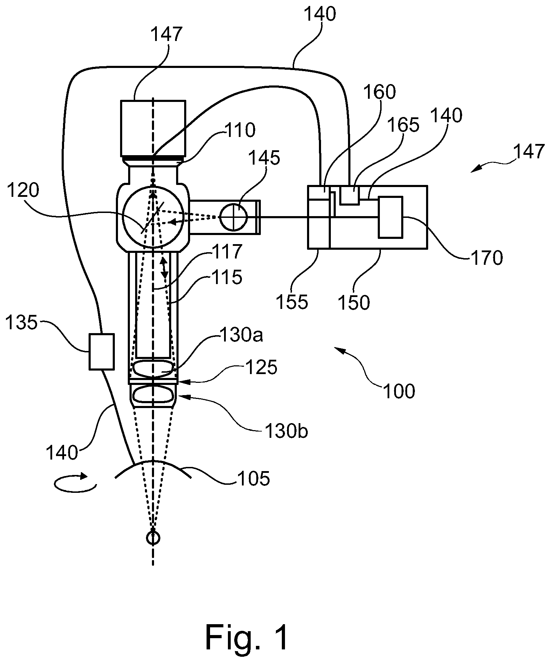

Figur 1 zeigt eine schematische Darstellung eines Ausführungsbeispiels einer Prüfvorrichtung 100 zum Prüfen eines optischen Prüflings 105. Hierbei wird von einer Strahlquelle 145 ein Lichtstrahl 115 entlang einer optischen Achse 117 in der Form eines Strahlenbündels an einem Strahlteiler 120 umgelenkt, wonach der Lichtstrahl 115 auf ein Filterelement 125 einfällt. Die Strahlquelle kann vorteilhafterweise mit einem Strichkreuz (Reticle) kombiniert sein. Das Filterelement 125 kann hierbei als Polarisator oder Analysator ausgebildet sein und dem Licht des Lichtstrahls 115 eine bestimmte Polarisationsrichtung einprägen oder ein von dem Prüfling 105 reflektiertes Licht nur bei einer bestimmten Polarisationsrichtung passieren zu lassen. Weiterhin kann beispielsweise eine Kollimations- und Fokussierungseinheit 130 vorgesehen sein, die in der optischen Achse 117 angeordnet ist und das Licht 115 auf den optischen Prüfling 105 fokussieren kann. Dabei kann die Kollimations- und Fokussiereinheit 130 beispielsweise in zwei Teileinheiten 130a und 130b je in Strahlrichtung vor oder nach dem Filterelement 125 angeordnet sind. Dabei wird das optische Element 130a als Kollimationslinse und das optische Element 130b als Fokussierlinse bzw. Vorsatzlinse bezeichnet. Ferner ist eine Rotationseinheit 135 vorgesehen, die beispielsweise als elektrischer Antrieb zur Drehung des Prüflings 105 um einen Rotationswinkel 140 ausgebildet ist. In der Fig. 1 ist diese Drehung derart dargestellt, dass die Rotationseinheit 135 den Prüfling 105 bzw. einen in der Fig. 1 nicht dargestellten Halter des Prüflings 105 dreht. Alternativ oder zusätzlich kann die Rotationseinheit 135 auch ausgebildet sein, um das gesamte Messsystem 100 um den Rotationswinkel 140 zu drehen. Die Rotationseinheit wird über eine Steuereinheit 165 angesteuert.

Vom Prüfling 105, genauer gesagt von dessen Oberfläche, wird nun das Licht des Lichtstrahls 115 reflektiert, wobei ein polarisierender Effekt auftritt, bei dem speziell dasjenige Licht mit einer hohen Intensität reflektiert wird, welches in der gleichen Polarisationsrichtung einfällt, die auch von der Oberfläche des Prüflings 105 am stärksten reflektiert wird. Dieses reflektierte Licht läuft anschließend durch den Strahlteiler 120 hindurch und wird von einem Sensor 110 einer Detektoreinheit 147 empfangen. Die Detektoreinheit 147 kann zusammen mit dem Sensor 110 integriert oder als Bestandteil eines Steuergerätes 150 über eine geeignete, kabelgebundene oder drahtlose, Schnittstelle mit diesem verbunden sein. Der Sensor 110 kann beispielsweise als eine CMOS- oder CCD-Kamera oder ein Projektionsschirm mit darauf gerichteter Kamera ausgebildet sein, um ein Abbild des Krümmungsmittelpunktes einer Oberfläche des optischen Prüflings 105 aus dem reflektierten Licht zu erhalten.

Unter Verwendung eines Steuergerätes 150 kann nun die Vorrichtung 100 betrieben werden. Hierbei kann mittels einer Ausgabeeinheit 155 die Ausgabe von Licht durch die Strahlquelle 145 angesteuert werden. Durch eine Einleseschnittstelle 160 kann nun das entsprechend durch die angesteuerte Ausgabe des Lichtes am Sensor 110 erhaltene reflektierte Licht bzw. ein entsprechendes Signal eingelesen werden. Wird nun beispielsweise eine Rotation des Prüflings 105 um einen entsprechenden Rotationswinkel 140 angesteuert, kann hieraus zusammen mit dem vom Sensor 110 erhaltenen Abbild mittels einer Bestimmungseinheit 170 die Lage der Polarisationsachse des Prüflings 105 aus dem vom Prüfling 105 reflektierten Licht bestimmt werden.

Zugleich ist es auch möglich, mit dem in der Figur 1 dargestellten Aufbau eine Zentriermessung durchzuführen, was sich lediglich durch die weitere Auswertung des vom Sensor 110 erfassten Bildes des vom Prüfling 105 reflektierten Lichts ermöglichen lässt.

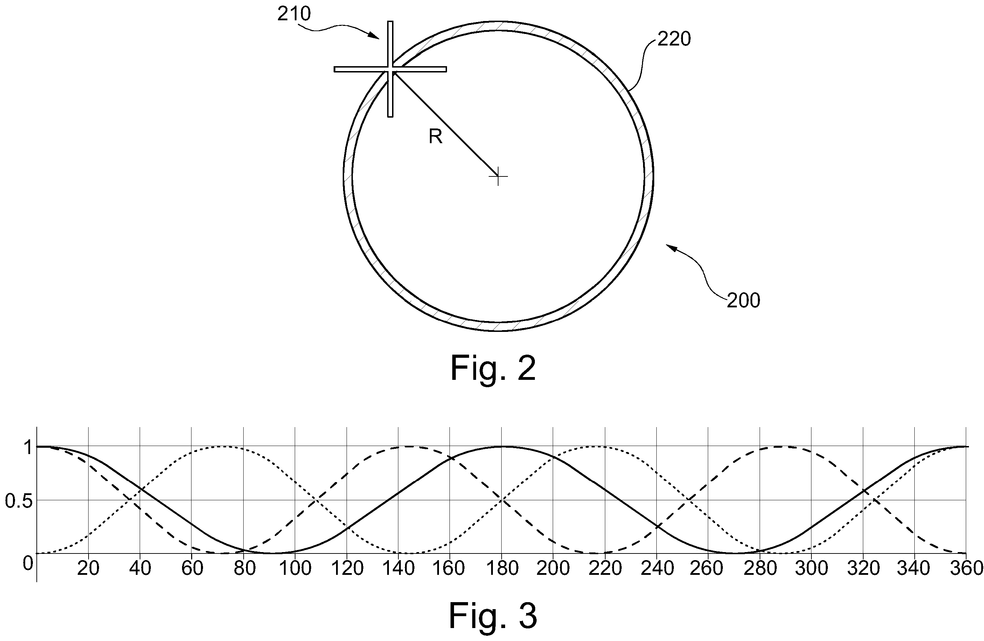

Fig. 2 zeigt eine schematische Darstellung des Bildes 200 des vom Prüfling 105 reflektierten Lichtes auf den Sensor 110. Die Darstellung aus der Figur 2 zeigt dabei ein auf den Sensor 110 reflektiertes bzw. einfallendes Licht, welches ein entsprechendes Lichtmuster 210 bzw. Intensitätsmuster ausbildet. Hierbei ist erkennbar, dass durch das reflektierte Licht ein Bild eines Objektes (im konkreten Beispiel eines Kreuzes) entsteht, welches durch die Rotation des Prüflings oder des Autokollimators einen Schlagkreis 220 ausformt. Aus dem Radius R des Schlagkreises kann auf eine Dezentrierung des Prüflings 105 geschlossen werden. Entsprechend der Rotationsstellung des Prüflings und dessen polarisationsbeeinflussenden Eigenschaften in Bezug zum Filterelement 125, variiert die (Licht-) Signalintensität innerhalb der Rotationsbewegung. Integriert man alle Kamerabilder über eine 360° Rotation des Filterelementes 125 bzw. des Prüflings 105 auf, erhält man anstatt einem Kreis mit konstanter Helligkeit, eine mit dem Azimuth-Winkel variierende, sinusförmige Intensitätsverteilung. In der Figur 2 ist diese Variation durch den Intensitätsverlauf angedeutet. Derjenige Rotationswinkel, für den die Helligkeit maximal ist, kann als derjenige Winkel verstanden werden, in dem die Polarisationsachse des Prüflings 105 ausgerichtet ist. Die Helligkeitsvariation über den Rotationswinkel enthält somit die Information über die Ausrichtung der Polarisationsachse des Prüflings 105, während der Durchmesser bzw. Radius R des Schlagkreises 220 ein Maß für die Zentrierung des Prüflings 105 darstellt. Die Rotationsbewegung des Prüflings 105 wird folglich für die Ermittlung beider Messgrößen genutzt, die günstigerweise parallel gemessen werden.

Fig. 3 zeigt eine schematische Darstellung von Signalverläufen einer erfassten Lichtintensität ohne und mit zusätzlicher Rotation eines Polarisationselementes. Hierbei wird eine normierte Intensität auf der Ordinate über einen Winkel auf der Abszisse aufgetragen. Die durchgezogene Sinuskurve beschreibt den detektierten Signalverlauf bei einer Rotation des Prüflings mit einer konstanten Rotationsgeschwindigkeit relativ zum Messsystem, ohne dass eine zusätzliche Rotation des Polarisators/Analysators erfolgt. Bei einer Messung in Reflexion kann dies über eine Rotation des ACM oder eine Rotation des Prüflings erzielt werden. Die gestrichelte bzw. gepunktete Sinuskurve entsteht bei einer mechanischen oder optischen Rotation des Polarisators/Analysators relativ zum Messsystem mit erhöhter Geschwindigkeit. Dadurch wird für jede azimutale Winkelstellung ein erstes Signal (gestrichelte Linie) sowie ein zweites, invertiertes Signal (gepunktete Linie) erfasst. Durch Addition der Signalverläufe erhalt man einen vollständig ausgeleuchteten Schlagkreis.

Somit kann ein "vollständiger" Schlagkreis bei Addition des gestrichelten und gepunkteten Intensitätsverlaufs erhalten werden, wie dies in dem unteren Teil der Fig. 3 dargestellt ist.

Es kann somit günstigerweise die Zentriermessung mit einer Polarisationsmessung in einem Messvorgang verknüpft werden. Dadurch wird sowohl der Bauraum kompakt gehalten, als auch die Messzeit minimiert. Um dies zu erreichen, wird gemäß einem Ausführungsbeispiel die Zentriermessung, bei der eine Rotation des Prüflings durchgeführt wird, mit einem polarisierenden Strahlengang verknüpft. Der hier vorgestellte Ansatz ermöglicht somit eine vorteilhafte Verknüpfung von Zentriermessung und Polarisationsmessung, mit der ein kompakter Messaufbau und kurze Messzeit ermöglicht wird.

Je nach Eigenschaften des Prüflings kann das Filterelement 125 bzw. der Polarisator und/oder der Analysator für zirkular polarisiertes Licht anstatt für linear polarisiertes Licht ausgelegt sein oder ein azimutaler Winkel zwischen Polarisator und (einem separaten) Analysator eingestellt sein.

Weitere technische Ausführungen von Varianten der hier vorgestellten Prüfvorrichtung wären beispielsweise:
Kollimator mit vorgesetztem Polarisator und Teleskop mit Analysator im Strahlengang zwischen Vorsatzoptik und "Dekollimationslinse". Die Zentrierung wird in Transmission gemessen.

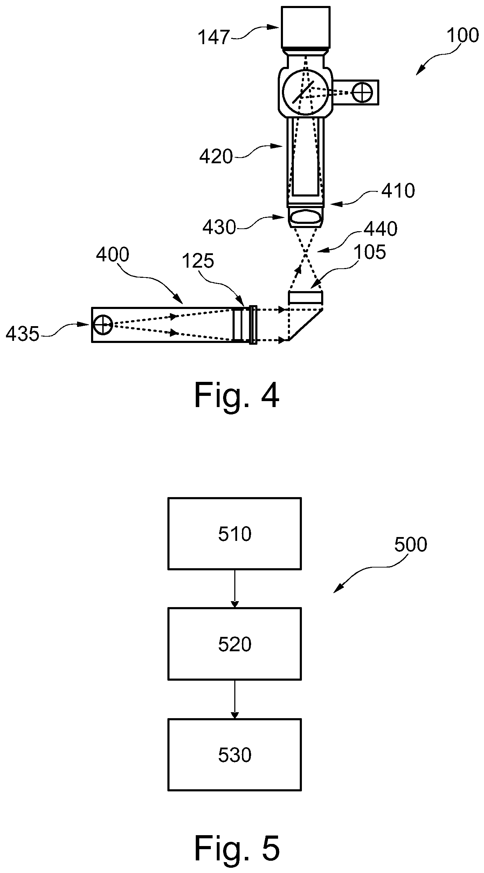

Fig. 4 zeigt eine schematische Darstellung eines Ausführungsbeispiels einer Prüfvorrichtung 100 zum Prüfen eines optischen Prüflings 105 in Transmission, bei welchem die simultane Messung einer Dezentrierung sowie einer polarisationsverändernden Eigenschaft eines optischen Elementes in Transmission gemessen wird. Die Dezentrierung wird hier ebenfalls anhand des Radius bzw. Durchmessers eines Schlagkreises ermittelt, welcher durch Rotation des Prüflings relativ zum Messsystem entsteht. Zur Bestimmung der polarisationsverändernden Eigenschaften des Prüflings 105 sind hier ein polarisierendes Element, z. B. ein Polarisator 125, im Kollimator 400 sowie ein polarisationsfilterndes Element, z. B. ein Analysator 410, im Teleskop 420 vorgesehen, das eine Vorsatzlinse 430 und eine in der Fig. 4 nicht explizit dargestellte Fokussierlinse bzw. eine "Dekollimationslinse" aufweist. Der Polarisator 125 im Kollimator 400 wird beispielsweise durch eine beleuchtete Strichplatte 435 beleuchtet. Die polarisierenden Elemente können ihrerseits, optisch oder mechanisch, relativ zum Messsystem rotiert werden, um etwa einen komplementären Signalverlauf, so wie in der Fig. 3 gezeigt und oben beschrieben, zu erhalten. Der Polarisator 125 sowie Analysator 410 können unabhängig voneinander rotierbar sein, oder stattdessen eine zusätzliche Lambda-Viertel-Platte rotiert werden, was z.B. bei der Bestimmung der Müller-Matrix des Prüflings von Vorteil ist. Weiterhin können der Polarisator 125 und der Analysator 410 über verschiedene, optische Eigenschaften verfügen. So kann der Polarisator 125 z. B. als Verzögerungsplatte ausgelegt oder mit einer solchen kombiniert oder verbunden sein, sodass die Lichtstrahlen hinter dem Kollimator 400 eine zirkulare Polarisation aufweisen. Die Lichtstrahlen sind ferner vor dem Vorsatzlinse 430 bzw. dem Analysator 410 in einem Prüflingsfokuspunkt 440 fokussiert. Eine solche Variante ist etwa dann von Vorteil, wenn der Prüfling 105 die Polarisation der Lichtstrahlen verändert, etwa von zirkular zu linear, was z. B. bei Pancake-Optiken für AR/VR-Anwendungen der Fall ist. Für derartige Prüflinge 105 ist eine Ausführung der Messung in Transmission somit besonders vorteilhaft.

Fig. 5 zeigt ein Ablaufdiagramm eines Ausführungsbeispiels eines Verfahrens 500 zur Prüfung eines optischen Prüflings, wobei das Verfahren 500 unter Verwendung einer Prüfvorrichtung entsprechend einer hier vorgestellten Variante ausgeführt wird und die einen Schritt 510 des Ausgebens von Licht eines Strahlenbündels aus der Strahlquelle durch das Filterelement auf den Prüfling und des Empfangens eines von dem Prüfling reflektierten oder transmittierten Lichts des Strahlenbündels in der Detektoreinheit. Ferner umfasst das Verfahren 500 einen Schritt 520 des Rotierens des Prüflings relativ zum Filterelement und einen Schritt 530 des Bestimmens der Polarisationsachse des Prüflings aus dem vom Prüfling reflektierten oder transmittierten Lichts.

## Patentansprüche

1. Prüfvorrichtung (100) für einen optischen Prüfling (105), wobei die Prüfvorrichtung (100) die folgenden Merkmale aufweist:
- eine Strahlquelle (145) zum Aussenden eines Strahlenbündels (115) entlang einer optischen Achse (117);
- ein in der optischen Achse (117) als polarisationsbeeinflussendes bzw. polarisationsfilterndes ausgebildetes optisches Element (125) zur Einprägung einer bestimmten Polarisationsrichtung des Lichts des Strahlenbündels (115) sowie zur Filterung eines vom Prüfling (105) reflektierten Lichts;
- eine Rotationseinheit (135), die ausgebildet ist, um eine Rotation des in der optischen Achse (117) liegenden Prüflings (105) relativ zur Prüfvorrichtung und/oder einzelner Baugruppen davon, um eine Strahlenachse und/oder die optische Achse (117), vorzunehmen; und
- eine Detektoreinheit (147), die ausgebildet ist, um eine Polarisationsachse des Prüflings (105) sowie dessen Dezentrierung aus einem Rotationswinkel (140) und einem vom Prüfling (105) reflektierten Lichtstrahl des Strahlenbündels (115), simultan, zu bestimmen.

2. Prüfvorrichtung (100) für einen optischen Prüfling (105), wobei die Prüfvorrichtung (100) die folgenden Merkmale umfasst:
- eine Strahlquelle (145) zum Aussenden eines Strahlenbündels (115) entlang einer optischen Achse (117);
- ein optisches Element zur Kollimation des ausgesendeten Strahlenbündels;
- ein als polarisationsbeeinflussendes ausgebildetes optisches Element zur Einprägung einer bestimmten Polarisationsrichtung des Lichts des Strahlenbündels (115);
- ein Element zur Halterung des optischen Prüflings;
- ein optisches Element zur Rekollimation des durch den Prüfling fokussierten Strahlenbündels;
- ein als polarisationsfilterndes ausgebildetes, optisches Element zur Filterung eines vom Prüfling (105) transmittierten Lichtes;
- ein optisches Element zur Refokussierung des vom Prüfling transmittierten Lichtes auf eine Detektionsebene;
- eine Rotationseinheit (135), die ausgebildet ist, um eine Rotation des in der optischen Achse (117) liegenden Prüflings (105) relativ zur Prüfvorrichtung und/oder einzelner Baugruppen davon, um eine Strahlenachse und/oder die optische Achse (117), vorzunehmen; und
- eine Detektoreinheit (147), die ausgebildet ist, um eine Polarisationsachse des Prüflings (105) sowie dessen Dezentrierung aus dem Rotationswinkel (140) und einem vom Prüfling (105) transmittierten Lichtstrahl des Strahlenbündels (115), simultan, zu bestimmen.

3. Prüfvorrichtung (100) gemäß Anspruch 1 oder 2, **dadurch gekennzeichnet, dass** die polarisationsbeeinflussenden Elemente im Strahlengang mechanisch und/oder optisch rotierbar sind.

4. Prüfvorrichtung (100) gemäß Anspruch 1 oder 2, **dadurch gekennzeichnet, dass** die Detektoreinheit (147) ausgebildet ist, um die Polarisationsachse des Prüflings (105) unter Verwendung einer Helligkeit, eines Helligkeitsmusters und/oder Lichtintensitätsmusters (210) des reflektierten oder transmittierten Lichtstrahls des Strahlenbündels (115) zu bestimmen.

5. Prüfvorrichtung (100) gemäß einem der vorangegangenen Ansprüche, **dadurch gekennzeichnet, dass** der Polarisator (125) ausgebildet ist, um dem Licht eine zirkulare oder lineare Polarisationsrichtung einzuprägen und wobei die Detektoreinheit (147) einen Analysator aufweist, der ausgebildet ist, um ein zirkular oder linear polarisiertes Licht passieren zu lassen.

6. Prüfvorrichtung (100) gemäß Anspruch 5, **dadurch gekennzeichnet, dass** der Polarisator (125) und der Analysator derart zueinander angeordnet sind, dass ein vordefinierter azimutaler Winkel zwischen der durch den Polarisator (125) definierten Polarisationsrichtung und einer durch den Analysator definierten Polarisationsrichtung des den Analysator passierenden Lichts eingestellt ist.

7. Prüfvorrichtung (100) gemäß einem der vorangegangenen Ansprüche, **dadurch gekennzeichnet, dass** die Detektoreinheit (147) ausgebildet ist, um ein Maß für eine Dezentrierung aus einem erfassten Schlagkreis (220) einer Helligkeitsvariation zu ermitteln.

8. Prüfvorrichtung (100) gemäß einem der vorangegangenen Ansprüche, **dadurch gekennzeichnet, dass** die Strahlquelle (145) und ein Sensor (110) in einem Autokollimator zusammen mit dem Polarisator (125) und/oder einem Analysator in der optischen Achse (117) verbaut sind und wobei ein Strahlteiler (120) vorgesehen ist, um ein von dem Prüfling (105) reflektiertes Licht aus einem zu dem von der Strahlquelle (145) eingestrahlten Licht parallelen Strahlengang auszukoppeln.

9. Verfahren (500) zur Prüfung eines optischen Prüflings (105), wobei das Verfahren (500) unter Verwendung einer Prüfvorrichtung (100) gemäß einem der vorangegangenen Ansprüche 1 bis 8 ausgeführt wird und die folgenden Schritte aufweist:
- Ausgeben (510) von Licht eines Strahlenbündels (115) aus der Strahlquelle (145) auf den Prüfling (105), wobei zunächst eine Polarisation auf das Strahlenbündel eingeprägt wird, und Empfangen eines von dem Prüfling (105) reflektierten oder durch den Prüfling transmittierten Lichts des Strahlenbündels (115) in der Detektoreinheit (147);
- Rotieren (520) des Prüflings (105) relativ zur Prüfvorrichtung (100) und/oder einzelner Baugruppen der Prüfvorrichtung; und
- Simultanes Bestimmen (530) der Polarisationsachse des Prüflings (105) sowie dessen Dezentrierung aus dem vom Prüfling (105) reflektierten oder transmittierten Lichts.

10. Verfahren (500) nach Anspruch 9 **dadurch gekennzeichnet, dass** die polarisationsbeeinflussenden Elemente relativ zur Prüfvorrichtung rotiert werden und dass für jede azimutale Winkelstellung des Prüflings im Verlauf von mindestens zwei Umdrehungen ein erstes Intensitätssignal sowie ein davon abweichendes zweites Intensitätssignal, erfasst werden.

11. Verfahren (500) nach Anspruch 10, **dadurch gekennzeichnet, dass** das erste Intensitätssignal und das zweite Intensitätssignal addiert werden, um einen Schlagkreis mit einer innerhalb eines Toleranzbereichs liegenden Intensitätsvariation zur Messung der Dezentrierung zu erhalten.

12. Steuergerät (150), das eingerichtet ist, um die Schritte (510, 520, 530) des Verfahrens (500) gemäß einem der vorangegangenen Ansprüche in entsprechenden Einheiten (155, 160, 170) auszuführen und/oder anzusteuern.

13. Computerprogramm umfassend Befehle, die bei der Ausführung des Programms durch einen Computer diesen veranlassen, die Schritte (510, 520, 530) des Verfahrens (500) gemäß Anspruch 9 auszuführen und/oder anzusteuern.

14. Maschinenlesbares Speichermedium, auf dem das Computerprogramm nach Anspruch 13 gespeichert ist

## Claims

1. Testing device (100) for an optical test object (105), wherein the testing device (100) has the following features:
- a beam source (145) for emitting a beam bundle (115) along an optical axis (117);
- an optical element (125) formed in the optical axis (117) as a polarization-influencing or polarization-filtering optical element for imposing a specific polarization direction of the light of the beam bundle (115) and for filtering light reflected by the test object (105);
- a rotation unit (135) designed to rotate the test object (105) lying in the optical axis (117) relative to the testing device, and/or individual assemblies thereof, about a beam axis and/or the optical axis (117); and
- a detector unit (147) designed to determine, simultaneously, a polarization axis of the test object (105) and the decentration thereof from a rotation angle (140) and a light beam of the beam bundle (115) that is reflected by the test object (105).

2. Testing device (100) for an optical test object (105), wherein the testing device (100) comprises the following features:
- a beam source (145) for emitting a beam bundle (115) along an optical axis (117);
- an optical element for collimating the emitted beam bundle;
- an optical element formed as a polarization-influencing optical element for imposing a specific polarization direction of the light of the beam bundle (115);
- an element for mounting the optical test object;
- an optical element for recollimating the beam bundle focused by the test object;
- an optical element formed as a polarization-filtering optical element for filtering light transmitted by the test object (105);
- an optical element for refocusing the light transmitted by the test object onto a detection plane;
- a rotation unit (135) designed to rotate the test object (105) lying in the optical axis (117) relative to the testing device, and/or individual assemblies thereof, about a beam axis and/or the optical axis (117); and
- a detector unit (147) designed to determine, simultaneously, a polarization axis of the test object (105) and the decentration thereof from the rotation angle (140) and a light beam of the beam bundle (115) that is transmitted by the test object (105).

3. Testing device (100) according to Claim 1 or 2, **characterized in that** the polarization-influencing elements in the beam path are mechanically and/or optically rotatable.

4. Testing device (100) according to Claim 1 or 2, **characterized in that** the detector unit (147) is designed to determine the polarization axis of the test object (105) using a brightness, a brightness pattern and/or a light intensity pattern (210) of the reflected or transmitted light beam of the beam bundle (115).

5. Testing device (100) according to any of the preceding claims, **characterized in that** the polarizer (125) is designed to impose a circular or linear polarization direction on the light, and wherein the detector unit (147) has an analyser designed to allow circularly or linearly polarized light to pass through.

6. Testing device (100) according to Claim 5, **characterized in that** the polarizer (125) and the analyser are arranged with respect to one another in such a way that a predefined azimuthal angle is set between the polarization direction defined by the polarizer (125) and a polarization direction, defined by the analyser, of the light passing through the analyser.

7. Testing device (100) according to any of the preceding claims, **characterized in that** the detector unit (147) is designed to ascertain a measure of a decentration from a detected circle of incidence (220) of a brightness variation.

8. Testing device (100) according to any of the preceding claims, **characterized in that** the beam source (145) and a sensor (110) are installed in an autocollimator together with the polarizer (125) and/or an analyser in the optical axis (117) and wherein a beam splitter (120) is provided in order to couple light reflected by the test object (105) out of a beam path parallel to the light radiated in by the beam source (145).

9. Method (500) for testing an optical test object (105), wherein the method (500) is carried out using a testing device (100) according to any of the preceding Claims 1 to 8 and has the following steps:
- emitting (510) light of a beam bundle (115) from the beam source (145) onto the test object (105), wherein firstly a polarization is imposed on the beam bundle, and receiving light of the beam bundle (115) that is reflected by the test object (105) or transmitted by the test object in the detector unit (147);
- rotating (520) the test object (105) relative to the testing device (100) and/or individual assemblies of the testing device; and
- simultaneously determining (530) the polarization axis of the test object (105) and the decentration thereof from the light reflected or transmitted by the test object (105).

10. Method (500) according to Claim 9, **characterized in that** the polarization-influencing elements are rotated relative to the testing device and **in that**, for each azimuthal angular position of the test object in the course of at least two revolutions, a first intensity signal and a second intensity signal deviating therefrom are detected.

11. Method (500) according to Claim 10, **characterized in that** the first intensity signal and the second intensity signal are added in order to obtain a circle of incidence with an intensity variation within a tolerance range for the purpose of measuring the decentration.

12. Control unit (150) configured to execute and/or control the steps (510, 520, 530) of the method (500) according to any of the preceding claims in corresponding units (155, 160, 170).

13. Computer program comprising commands which, when executed by a computer, cause the computer to execute and/or control the steps (510, 520, 530) of the method (500) according to claim 9.

14. Machine-readable storage medium on which the computer program according to Claim 13 is stored.

## Revendications

1. Dispositif de test (100) pour un échantillon optique (105), le dispositif de test (100) présentant les caractéristiques suivantes :
- une source de rayons (145), pour émettre un faisceau de rayons (115) selon un axe optique (117) ;
- un élément optique (125), agencé sur l'axe optique (117) et conçu pour influencer la polarisation ou filtrer la polarisation, afin d'imprimer une direction de polarisation déterminée à la lumière du faisceau de rayons (115) et pour filtrer une lumière réfléchie par l'échantillon (105) ;
- une unité de rotation (135), qui est conçue pour mettre exécuter une rotation de l'échantillon (105) situé sur l'axe optique (117) autour d'un axe des rayons et/ou de l'axe optique (117) par rapport au dispositif de test et/ou des modules individuels de celui-ci ; et
- une unité de détection (147), qui est conçue pour déterminer simultanément un axe de polarisation de l'échantillon (105) ainsi que son décentrage à partir d'un angle de rotation (140) et d'un rayon lumineux du faisceau de rayons (115), réfléchi par l'échantillon (105).

2. Dispositif de test (100) pour un échantillon optique (105), le dispositif de test (100) présentant les caractéristiques suivantes :
- une source de rayons (145), pour émettre un faisceau de rayons (115) selon un axe optique (117) ;
- un élément optique, pour la collimation du faisceau de rayons émis ;
- un élément optique, conçu pour influencer la polarisation afin d'imprimer une direction de polarisation déterminée à la lumière du faisceau de rayons (115) ;
- un élément pour le maintien de l'échantillon optique ;
- un élément optique, pour la re-collimation du faisceau de rayons focalisé par l'échantillon ;
- un élément optique, conçu sous la forme d'un filtre de polarisation, pour filtrer une lumière transmise par l'échantillon (105) ;
- un élément optique, pour la re-focalisation sur un plan de détection de la lumière transmise par l'échantillon ;
- une unité de rotation (135), qui est conçue pour exécuter une rotation de l'échantillon (105) situé sur l'axe optique (117) autour d'un axe des rayons et/ou de l'axe optique (117) par rapport au dispositif de test et/ou à des modules individuels de celui-ci ; et
- une unité de détection (147), qui est conçue pour déterminer simultanément un axe de polarisation de l'échantillon (105) ainsi que son décentrage à partir de l'angle de rotation (140) et d'un rayon lumineux du faisceau de rayons (115), transmis par l'échantillon (105).

3. Dispositif de test (100) selon la revendication 1 ou la revendication 2, **caractérisé en ce que** les éléments influençant la polarisation dans le trajet des rayons sont aptes à être mis en rotation mécaniquement et/ou optiquement.

4. Dispositif de test (100) selon la revendication 1 ou la revendication 2, **caractérisé en ce que** l'unité de détection (147) est conçue pour déterminer l'axe de polarisation de l'échantillon (105) en utilisant une luminance, un motif de luminance et/ou un motif d'intensité lumineuse (210) du rayon lumineux du faisceau de rayons (115), réfléchi ou transmis.

5. Dispositif de test (100) selon l'une des revendications précédentes, **caractérisé en ce que** le polariseur (125) est conçu pour imprimer à la lumière une direction de polarisation circulaire ou linéaire et dans lequel l'unité de détection (147) comprend un analyseur qui est conçu pour laisser passer une lumière polarisée de manière circulaire ou linéaire.

6. Dispositif de test (100) selon la revendication 5, **caractérisé en ce que** le polariseur (125) et l'analyseur sont agencés l'un par rapport à l'autre de telle sorte qu'un angle azimutal prédéfini soit réglé entre la direction de polarisation définie par le polariseur (125) et une direction de polarisation définie par l'analyseur de la lumière passant à travers l'analyseur.

7. Dispositif de test (100) selon l'une des revendications précédentes, **caractérisé en ce que** l'unité de détection (147) est conçue pour déterminer une mesure d'un décentrage par rapport à un cercle de battement détecté (220) d'une variation de luminance.

8. Dispositif de test (100) selon l'une des revendications précédentes, **caractérisé en ce que** la source de rayons (145) et un capteur (110) sont intégrés dans un autocollimateur conjointement avec le polariseur (125) et/ou un analyseur dans l'axe optique (117) et un séparateur de faisceau (120) étant prévu pour séparer une lumière réfléchie par l'échantillon (105) à partir d'une trajectoire de faisceau parallèle à la lumière émise par la source de rayons (145).

9. Procédé (500) pour tester un échantillon optique (105), le procédé (500) étant mis en œuvre au moyen d'un dispositif de test (100) selon l'une des revendications 1 à 8 précédentes et comprenant les étapes suivantes :
- envoyer (510) sur l'échantillon (105) la lumière d'un faisceau de rayons (115) provenant de la source de rayons (145), en imprimant d'abord une polarisation au faisceau de rayons, et recevoir dans l'unité de détection (147) une lumière du faisceau de rayons (115) réfléchie par l'échantillon (105) ou transmise à travers celui-ci ;
- rotation (520) de l'échantillon (105) par rapport au dispositif de test (100) et/ou à des modules individuels du dispositif de test ; et
- déterminer simultanément (530) l'axe de polarisation de l'échantillon (105) ainsi que son décentrage par rapport à la lumière réfléchie ou transmise par l'échantillon (105).

10. Procédé (500) selon la revendication 9, **caractérisé en ce que** les éléments influençant la polarisation sont en rotation par rapport au dispositif de test et **en ce que**, pour chaque position angulaire azimutale de l'échantillon au cours d'au moins deux tours, un premier signal d'intensité ainsi qu'un deuxième signal d'intensité différent de celui-ci sont enregistrés.

11. Procédé (500) selon la revendication 10, **caractérisé en ce que** le premier signal d'intensité et le deuxième signal d'intensité sont additionnés afin d'obtenir un cercle de battement présentant une variation d'intensité comprise dans une plage de tolérance pour mesurer le décentrage.

12. Dispositif de commande (150) qui est conçu pour mettre en œuvre et/ou commander les étapes (510, 520, 530) du procédé (500) selon l'une des revendications précédentes dans des unités correspondantes (155, 160, 170).

13. Programme informatique comprenant des instructions qui, lors de l'exécution du programme par un ordinateur, amènent celui-ci à exécuter et/ou à commander les étapes (510, 520, 530) du procédé (500) selon la revendication 9.

14. Support de stockage lisible par machine, sur lequel est stocké le programme informatique selon la revendication 13.
